(19) Europäisches Patentamt
European Patent Office
Office européen des brevets

(11) EP 4 527 877 A1

(12) EUROPEAN PATENT APPLICATION
published in accordance with Art. 153(4) EPC

(43) Date of publication:
**26.03.2025 Bulletin 2025/13**

(21) Application number: **23824291.1**

(22) Date of filing: **16.06.2023**

(51) International Patent Classification (IPC):
***C08J 5/18*** *(2006.01)* ***C08F 220/18*** *(2006.01)*
***C08F 4/40*** *(2006.01)*

(52) Cooperative Patent Classification (CPC):
**C08F 4/40; C08F 220/18; C08J 5/18; C08J 7/16**

(86) International application number:
**PCT/KR2023/008388**

(87) International publication number:
**WO 2023/244078 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.06.2022 KR 20220074115**

(71) Applicant: **LG Chem, Ltd.**
**Yeongdeungpo-gu**
**Seoul 07336 (KR)**

(72) Inventors:
- **KIM, Woo Yeon**
  **Daejeon 34122 (KR)**
- **KIM, Hyun Cheol**
  **Daejeon 34122 (KR)**
- **HONG, Jae Sung**
  **Daejeon 34122 (KR)**
- **PARK, Jun Hyoung**
  **Daejeon 34122 (KR)**

(74) Representative: **Plasseraud IP**
**104 Rue de Richelieu**
**CS92104**
**75080 Paris Cedex 02 (FR)**

(54) **METHOD FOR MANUFACTURING CURED PRODUCT AND CURED PRODUCT ACCORDING THERETO**

(57) The present invention provides a method for producing a cured product using an inert redox initiator system, and a cured product resulting therefrom. Specifically, the method for producing a cured product according to the present invention comprises a step of contacting a layer of a curable composition including a curable syrup and an initiator component with a layer of an initiator component of a film including a layer of an initiator component on a surface, and is characterized in that the initiator component is an inert redox initiator system comprising an oxidizing agent and a reducing agent, the reducing agent comprises a metal compound, and the metal compound is included in an effective amount only in any one of the layer of the initiator component on the film and the layer of the curable composition.



Processed by Luminess, 75001 PARIS (FR)

## Description

### Technical Field

The present invention relates to a method for producing a cured product and a cured product resulting therefrom.

### Background Art

Solvent-type compositions have been mainly used as the existing method for producing a cured product, where the solvent-type compositions essentially require high temperature or UV irradiation during a curing process, such as a volatilization process of the solvent.

However, if necessary, the curing process may be performed after a composition required to form a cured product is applied to a specific device, where the device to which the curable composition is applied is affected by high temperature or UV irradiation, whereby there may be a problem that physical properties of the device are lowered. In forming the cured product in this way, there are cases where it is difficult to apply high temperature or UV processes.

In addition, the solvent-type compositions cause a contamination problem in the volatilization process of the solvent and a quality issue problem due to gas generation.

To solve the above problems, a method of forming a cured product by minimizing the use of solvents may also be considered, but it is a difficult task to implement a cured product having physical properties like those of a solvent-type composition using a solventless composition.

### Disclosure

### Technical Problem

Therefore, the problem to be solved by the present invention is to provide a cured product which is also producible without applying a separate high temperature or UV process through a method for producing a cured product using an inert redox initiator system. The technical problems of the present invention are not limited to the technical problems as mentioned above, and other technical problems without any mention will be clearly understood by those skilled in the art from the following description.

### Technical Solution

The present invention can make various changes and can have various examples, whereby specific examples will be illustrated and described in detail in the drawings. However, these are not intended to limit the present invention to specific embodiments, and it should be understood to include all changes, equivalents, and substitutes included in the spirit and technical scope of the present invention.

In this specification, the term normal temperature or room temperature means a natural temperature without artificially worming or cooling, which can indicate any one temperature of about 10 to 30°C, preferably 23 to 27°C, depending on the season.

The terms used in the present application are only used to describe specific examples, which are not intended to limit the present invention. Singular expressions include plural expressions unless the context clearly dictates otherwise. In the present application, it must be understood that the terms such as "comprise" or "have" are intended to designate the presence of features, numbers, steps, operations, components, parts, or combinations thereof described in the specification, but do not exclude in advance the presence or addition possibility of one or more other features, or numbers, steps, operations, components, parts, or combinations thereof.

Unless otherwise defined, all terms used herein, including technical or scientific terms, have the same meanings as those commonly understood by those having ordinary knowledge in the art to which the present invention belongs. Terms such as those defined in commonly used dictionaries should be interpreted as having meanings consistent with the meanings in the context of the related art, which are not interpreted in ideal or excessively formal meanings, unless explicitly defined in the present application.

In one specific example according to the present invention, the present invention may relate to a method for producing a cured product. The method for producing a cured product of the present invention is premised on an inert redox initiator system. In this specification, the "redox initiator system" means that radical polymerization is initiated by a redox initiator at room temperature, and specifically, means that free radicals generated according to the redox reaction of the initiator initiate radical polymerization through an electron transfer reaction. In addition, particularly, the present invention uses an inert redox initiator system, where in this specification, the "inert redox initiator system" means a redox initiator system formulated so that the redox is impossible only with a single initiator component.

In one example, the method for producing a cured product may comprise a step of contacting a layer of a curable composition including a curable syrup and an initiator component with a layer of an initiator component of a film including a layer of an initiator component on a surface. The method of contacting the layer of the curable composition with the layer of the initiator component of the film including the layer of the initiator component on the surface is not greatly limited, but as one example, the curable composition may be applied directly on the film, or it may also be applied to any base material, and then laminated. In addition, the step of contacting the layer of the initiator component of the film including the layer of the initiator component on the surface with the layer of the curable composition may also contact the layer of the initiator component of the film including the layer of the initiator component on the surface with one side of the layer of the curable composition, and may also comprise a step of contacting it with both sides.

Meanwhile, in this specification, the "curable syrup" means a unit forming a polymer in the final cured product through curing or crosslinking, which may comprise an oligomer formed by polymerizing two or more monomers, or a polymer component and a monomer component. As one example, the curable syrup may comprise a monomer, a (partial) polymer, and a crosslinking agent, where if the monomer composition is partially polymerized according to the desired composition, some of the monomers are polymerized to form an oligomer or polymer, and the remaining monomers remain, whereby the curable syrup may be constituted.

Therefore, in this specification, the term of a monomer unit, such as a (meth)acrylate unit, which is described below, may mean a monomer existing in a state of forming the oligomer or polymer in the curable syrup, or a monomer which is not polymerized, but contained in the curable syrup. Therefore, when the content of the curable syrup is calculated in this specification, it means that the syrup components include not only components which do not participate in polymerization to be in a monomer state, but also components participating in polymerization.

In addition, as described below, an oxidizing agent and a reducing agent, which are initiator components, are for initiating polymerization only by generating radicals, but are not introduced for the purpose of units forming the polymer in the final cured product, thereby being distinguished from the curable syrup, but some of the initiator components may also exist by binding to the polymer in the final cured product.

Also, in this specification, the initiator component means a redox initiator, which may comprise an oxidizing agent and a reducing agent. In this specification, the oxidizing agent and reducing agent mean components participating or assisting in generating radicals which induce polymerization by participating or assisting in an oxidation-reduction reaction under a redox initiator system.

The curable composition in the present invention comprises a curable syrup containing a monomer unit, a crosslinking agent and/or a (partial) polymer, a filler component, and an initiator, which is a concept encompassing a reducing agent and an oxidizing agent, which needs to be designed to have excellent solubility, compatibility, dispersion rates, and reactivity between the components constituting the composition, without being limited thereto, but the present application can use the following composition.

In one example, the curable composition may comprise a reducing agent in a range of 0.05 to 10 parts by weight relative to 100 parts by weight of the curable syrup, which is not limited thereto, but as one example, the lower limit of the reducing agent content may be 0.07 parts by weight or more, 0.1 parts by weight or more, 0.13 parts by weight or more, 0.15 parts by weight or more, 0.17 parts by weight or more, 0.2 parts by weight or more, 0.25 parts by weight or more, 0.3 parts by weight or more, 0.35 parts by weight or more, 0.4 parts by weight or more, 0.45 parts by weight or more, 0.5 parts by weight parts by weight or more, 0.55 parts by weight or more, 0.6 parts by weight or more, 0.65 parts by weight or more, 0.7 parts by weight or more, 0.75 parts by weight or more, or 0.8 parts by weight, and the upper limit thereof may be 9 parts by weight or less, 8 parts by weight or less, 7 parts by weight or less, 6 parts by weight or less, 5 parts by weight or less, 4 parts by weight or less, 3 parts by weight or less, or 2 parts by weight or less. By comprising the reducing agent in the above content, the present invention can obtain a cured product securing sufficient curability to have the desired physical properties.

**In** one example, the reducing agent may comprise a metal compound. According to the present invention, the metal compound is not significantly limited, if the layer of the curable composition and the layer of the initiator component are in direct contact with each other to induce or promote a redox reaction without separate heat or UV irradiation, and the composition containing the reducing agent can be stored stably, and it is particularly preferable to have excellent solubility, compatibility, dispersion rates, and reactivity with the curable syrup.

The metal compound may be included in an effective amount only in any one of the layer of the initiator component and the layer of the curable composition in the film. Here, the effective amount means an amount capable of inducing a significant oxidation-reduction reaction to produce a cured product. That is, the metal compound may be included in an effective amount only in any one of the layer of the initiator component and the layer of the curable composition, and may not be included substantially in the other layer. As one example, when the metal compound is included in an effective amount in the layer of the initiator component, the metal compound may not be substantially included in the layer of the curable composition. In addition, as another example, when the metal compound is included in an effective amount in the layer of the curable composition, the metal compound may not be substantially included in the layer of the initiator component. Here, the meaning that it is not substantially included may be one included in 0 wt%, and even if the metal compound is included in the layer of the curable composition, it is included in 1 wt% or less, 0.5 wt% or less, or 0.1 wt% or

less, whereby it may be one included in a trace amount rather than an effective amount capable of inducing the oxidation-reduction reaction.

In addition, among the layer of the initiator component and the layer of the curable composition layer in the film, the layer containing the metal compound in an effective amount may not substantially contain an oxidizing agent. That is, in the present invention, the case where the oxidizing agent and the metal compound are contained substantially together in the same layer before forming the cured product may not be assumed. In other words, when the metal compound is included in an effective amount in the layer of the initiator component in the film, the oxidizing agent may not be included in an effective amount in the layer of the initiator component in the film, but may be included in an effective amount in the layer of the curable composition. As another example, when the metal compound is included in an effective amount in the layer of the curable composition, the oxidizing agent may not be included in the layer of the curable composition in an effective amount, but may be included in an effective amount in the layer of the initiator component of the film.

As one example, the metal included in the metal compound may be a transition metal, and the metal compound may be a salt or chelate containing a metal ion, or a hydrate thereof and may comprise one type or more. Here, the metal ion may be one or more selected from cobalt, iron, vanadium, copper, manganese, nickel, titanium, aluminum, tin, chromium, zinc, zirconium, indium, manganese, and a mixture thereof. In detail, the metal compound may be a cobalt-containing component, where in the cobalt-containing component, the cobalt may have a +2-valent or +3-valent oxidation state. The usable cobalt-containing component may include cobalt naphthenate, cobalt sulfide, and the like, but is not limited thereto. As another example, the metal compound may be an iron-containing component, where in the iron-containing component, the iron may have a +2-valent or +3-valent oxidation state. The usable iron-containing component may include iron (III) sulfate, iron (II) sulfate, iron (III) chloride, iron (II) chloride, iron carboxylate, iron naphthenate, iron (III), iron (II), or acetylacetonate iron, but is not limited thereto. As another example, the metal compound may be a vanadium-containing component, where in the vanadium-containing component, the vanadium may have a +4-valent or +5-valent oxidation state. The usable vanadium-containing component may include vanadyl acetylacetonate, vanadyl stearate, vanadium naphthenate, vanadium benzoyl acetonate, vanadyl oxalate, vanadium (V) oxytriisopropoxide, ammonium metavanadate (V), sodium metavanadate, vanadium (V) pentoxide, or vanadyl sulfate (V), but is not limited thereto. As another example, the metal compound may be a copper-containing component, where in the copper-containing component, the copper may have a +1-valent or +2-valent oxidation state. The usable copper-containing component may include copper acetate, copper chloride, copper benzoate, copper acetonate, copper naphthenate, copper carboxylate, copper salicylate, a complex or ethylenediamine tetra-acetic acid of copper and thiourea, but is not limited thereto. In addition to this, the metal compound may be exemplified by manganese naphthenate, nickel naphthenate, titanium acetylacetonate, copper sulfate, manganese sulfate, or nickel sulfate, and the like.

Particularly, according to the method for producing a cured product according to the present application, by satisfying a combination of a specific composition with the curable syrup and the initiator component, it is possible to implement the desired effect in the present application more excellently.

In addition, the reducing agent may include an organic compound, where the organic compound is not significantly limited, if it induces or promotes the oxidation-reduction reaction by directly contacting the layer of the curable composition with the layer of the initiator component without separate heat or UV irradiation.

The organic compound may also be substantially included together in a layer containing an oxidizing agent among the layer of the initiator component and the layer of the curable composition in the film, and may also be substantially included together in a layer containing a metal compound, but may be selectively and substantially included only in either the layer containing the oxidizing agent or the layer containing the metal compound.

As one example, the organic compound may be at least one from the group consisting of amines, pyridines, aldehyde amine condensation compounds, thioureas, and their derivatives, and may also be two or more. In detail, an example of the organic compound may include N,N-dimethyl p-toluidine, N,N-dimethyl formamide, triethylamine, N,N-diisopropanol p-chloroaniline, N,N-diisopropanol p-bromoaniline, N,N-diisopropanol p-bromo-o-methyl aniline, N,N-dimethyl-p-chloroaniline, N,N-dimethyl-p-bromoaniline, N,N-diethyl-p-chloroaniline, N,N-diethyl-p-bromoaniline, 3,5-diethyl-1,2-dihydro-1-phenyl-2-propyl pyridine, N-benzoyl sulfur urea or tetramethyl thiourea, and the like, but is not limited thereto, and preferably, a tertiary amine-based organic compound may be used. Particularly, the organic compound is preferably a compound which is in a liquid phase and has a half-life within a range of 70 to 170°C or within a range of 80 to 150°C. By using the organic compound whose half-life temperature satisfies the above range, the present invention can suppress the self-reaction in a storage state, and can maintain the viscosity of the composition containing the organic compound at the level desired in the present invention. In this specification, the half-life is an indicator showing a decomposition rate of a compound, which means the time until the remaining amount of the compound is halved.

In one example, when both a metal compound and an organic compound are included as the reducing agent, the organic compound may be included in a range of 100 to 700 parts by weight relative to 100 parts by weight of the metal compound, and as one example, the lower limit thereof may be 130 parts by weight or more, 150 parts by weight or more, 170 parts by weight or more, 200 parts by weight or more, 230 parts by weight or more, 250 parts by weight or more, 270 parts by weight or more, or 300 parts by weight or more, and the upper limit thereof may be 650 parts by weight or less, 600

parts by weight or less, 550 parts by weight or less, 500 parts by weight or less, 450 parts by weight or less, 400 parts by weight or less, 350 parts by weight or less, or 330 parts by weight or less. The present invention can provide a cured product with excellent curing physical properties through sufficient curing rates by comprising the metal compound and the organic compound in the above weight ratio.

Also, in one example, the curable composition may comprise an oxidizing agent, where the oxidizing agent is not significantly limited if it participates in the oxidation-reduction reaction to generate radicals inducing polymerization, and particularly, it is preferable that it has excellent compatibility with the curable syrup. As one example, the oxidizing agent may include a peroxide, a peroxy ester, a diacyl peroxide, or a persulfate, but is not limited thereto, and specifically, as the oxidizing agent, methyl ethyl ketone peroxide, t-butyl hydroperoxide, p-menthane hydroperoxide, cumene hydroperoxide, diisopropylbenzene hydroperoxide, t-butyl peroxylaurate, t-butyl peroxybenzoate, t-butyl peroxydecanoate, 1,5-di-t-butyl peroxy-3,3,5-trimethyl cyclohexane, ethyl acetoacetate peroxide, benzoyl peroxide, hydrogen peroxide, or a combination thereof may be used.

In one example, the oxidizing agent may be included in a range of 100 to 2,000 parts by weight relative to 100 parts by weight of the reducing agent, and as one example, the lower limit thereof may be 130 parts by weight or more, 150 parts by weight or more, 170 parts by weight or more, 200 parts by weight or more, 230 parts by weight or more, 250 parts by weight or more, 270 parts by weight or more, 300 parts by weight or more, 400 parts by weight or more, 500 parts by weight or more, 600 parts by weight or more, 700 parts by weight or more, 800 parts by weight or more, or 900 parts by weight or more, and the upper limit thereof may be 1,900 parts by weight or less, 1,800 parts by weight or less, 1,700 parts by weight or less, 1,600 parts by weight or less, 1,500 parts by weight or less, 1,400 parts by weight or less, 1,300 parts by weight or less, 1,200 parts by weight or less, 1,100 parts by weight or less, or 1,000 parts by weight or less.

The curable syrup may be a polymer component, as described above. In one example, the curable syrup may comprise an alkyl (meth)acrylate unit, a polar functional group-containing monomer unit, and a crosslinking agent.

In one example, the alkyl (meth)acrylate unit may be an alkyl (meth)acrylate having an alkyl group with 4 to 20 carbon atoms, where the carbon number of the alkyl group may be, for example, 16 or less, 12 or less, or 8 or less. Such an alkyl (meth)acrylates may be included in a ratio of about 30 to 70 wt% in the curable syrup. In another example, the ratio may be 33 wt% or more, 35 wt% or more, 37 wt% or more, 40 wt% or more 43 wt% or more 45 wt% or more, 47 wt% or more, or 48 wt% or more, or may also be 77 wt% or less, 75 wt% or less, 73 wt% or less, 70 wt% or less, 67 wt% or less, 65 wt% or less, 63 wt% or less, 60 wt% or less, 57 wt% or less, 55 wt% or less, 53 wt% or less, or 50 wt% or less or so.

In addition, the alkyl group in the alkyl (meth)acrylate unit may be a linear or branched aliphatic alkyl group, and may be in a state of being substituted or unsubstituted. As the linear or branched aliphatic alkyl (meth)acrylate, for example, any one, or two or more selected from the group consisting of n-butyl (meth)acrylate, t-butyl (meth)acrylate, sec-butyl (meth)acrylate, pentyl (meth)acrylate, 2-ethylbutyl (meth)acrylate, 2-ethylhexyl (meth)acrylate, n-octyl (meth)acrylate, isooctyl (meth)acrylate, isononyl (meth)acrylate, lauryl (meth)acrylate and tetradecyl (meth)acrylate may be applied.

The curable syrup may contain, as additional components, a polar functional group-containing monomer unit. The curable syrup may contain, as the polar functional group-containing monomer unit, a hydroxy group-containing monomer unit, a carboxyl group-containing monomer unit, or an epoxy group-containing monomer unit, without being limited thereto.

As the monomer having a polar functional group, for example, a hydroxyalkyl (meth)acrylate such as 2-hydroxyethyl (meth)acrylate, 2-hydroxypropyl (meth)acrylate, 4-hydroxybutyl (meth)acrylate, 6-hydroxyhexyl (meth)acrylate and/or 8-hydroxyoctyl (meth)acrylate (wherein the carbon number of the alkyl group may be 1 to 20, 1 to 16, 1 to 12, 1 to 8 or 1 to 4, and the alkyl group may be linear or branched, or may be substituted or unsubstituted.); or hydroxy polyalkylene glycol (meth)acrylate such as 2-hydroxy polyethylene glycol (meth)acrylate or 2-hydroxy polypropylene glycol (meth)acrylate, and the like, an epoxy group-containing (meth)acrylate such as glycidyl (meth)acrylate, or acrylic acid, and the like may be used, without being limited thereto.

In one embodiment of the present application, the monomer unit having the polar functional group may be included in the polymer component in a range of 3 to 60 parts by weight relative to 100 parts by weight of the alkyl (meth)acrylate unit. In another example, the ratio may be 5 parts by weight or more, 7 parts by weight or more, 10 parts by weight or more, or 13 parts by weight or more, or may also be 55 parts by weight or less, 50 parts by weight or less, 48 parts by weight or less, 46 parts by weight or less, 44 parts by weight or less, 42 parts by weight or less, 40 parts by weight or less, 37 parts by weight or less, 35 parts by weight or less, 33 parts by weight or less, 30 parts by weight or less, 27 parts by weight or less, 25 parts by weight or less, 23 parts by weight or less, 20 parts by weight or less, 17 parts by weight or less, or 15 parts by weight or less or so.

The curable syrup may further comprise a unit of a monomer represented by Formula 1 below.

[Formula 1]

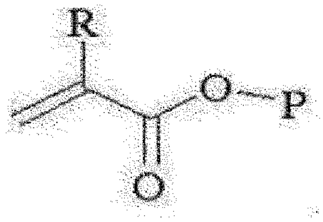

In Formula 1, R is hydrogen or an alkyl group, and P is a monovalent substituent of a non-aromatic ring structure with 3 to 20 carbon atoms. Since the alkyl (meth)acrylate unit is a linear or branched aliphatic unit, it is distinguished from Formula 1 in that it does not have a ring structure.

Here, the alkyl group may be exemplified by a linear, branched, or cyclic substituted or unsubstituted alkyl group with 1 to 20 carbon atoms, 1 to 16 carbon atoms, 1 to 12 carbon atoms, 1 to 8 carbon atoms, or 1 to 4 carbon atoms.

Meanwhile, P has a total carbon number of 3 to 20 and is a monovalent substituent with a non-aromatic ring structure, and for example, it may be a monovalent substituent derived from an aliphatic saturated or unsaturated hydrocarbon cyclic compound. The ring structure may be monocyclic, or may also have a polycyclic structure such as a condensed type or a spiro type, and in another example, the number of carbon atoms forming the ring structure may be 5 or more, 6 or more, or 7 or more, or may be 18 or less, 16 or less, 14 or less, or 12 or less. Such a substituent may be applied by, for example, an isobornyl group, a cyclohexyl group, a norbornanyl group, a norbornenyl group, a dicyclopentadienyl group, an ethynylcyclohexane group, an ethynylcyclohexene group, or an ethynyldecahydronaphthalene group, and the like, but is not limited thereto. In addition, the ring structure may be unsubstituted or substituted with an alkyl group having 1 to 4 carbon atoms.

The monomer unit of Formula 1 may be included in the polymer component in a range of about 10 to 80 parts by weight relative to 100 parts by weight of the alkyl (meth)acrylate unit. In another example, the ratio may be 10 parts by weight or more, 13 parts by weight or more, 17 parts by weight or more, 21 parts by weight or more, 25 parts by weight or more, 29 parts by weight or more, 33 parts by weight or more, 37 parts by weight or more, 40 parts by weight or more, 43 parts by weight or more, 45 parts by weight or more, 47 parts by weight or more, 50 parts by weight or more, 53 parts by weight or more, 55 parts by weight or more, 57 parts by weight or more, or 58 parts by weight or more, or may also be 80 parts by weight or less, 78 parts by weight or less, 76 parts by weight or less, 74 parts by weight or less, 72 parts by weight or less, 70 parts by weight or less, 68 parts by weight or less, 66 parts by weight or less, 64 parts by weight or less, 62 parts by weight or less, 60 parts by weight or less, 55 parts by weight or less, 50 parts by weight or less, 47 parts by weight or less, 45 parts by weight or less, or 40 parts by weight or less. In addition, the curable syrup of the present invention may further contain monomer units in addition to the foregoing, if necessary.

For example, the curable syrup may further contain a nitrogen-containing reactive monomer unit. Such a nitrogen-containing reactive monomer may be exemplified by one or two or more from (meth)acrylamide, N,N-dimethyl (meth)acrylamide, N,N-diethyl (meth)acrylamide, N-isopropyl (meth)acrylamide, N-methylol (meth)acrylamide, diacetone (meth)acrylamide, N-vinylacetoamide, N,N'-methylenebis(meth)acrylamide, N,N-dimethylaminopropyl (meth)acrylamide, N,N-dimethylaminopropyl (meth)acrylamide, N-vinylpyrrolidone, N-vinylcaprolactam, or (meth)acryloylmorpholine, and the like, but is not limited thereto. A suitable monomer may be exemplified by, for example, (meth)acrylamide, N-alkyl (meth)acrylamide and/or N,N-dialkyl (meth)acrylamide, and the like. Here, the alkyl group may be exemplified by a substituted or unsubstituted alkyl group, which is linear, branched, or cyclic, with 1 to 20 carbon atoms, 1 to 16 carbon atoms, 1 to 12 carbon atoms, 1 to 8 carbon atoms, or 1 to 4 carbon atoms.

Such a nitrogen-containing reactive monomer unit may be included in the polymer component in a range of about 1 to 20 parts by weight relative to 100 parts by weight of the alkyl (meth)acrylate unit. In another example, the ratio may be 3 parts by weight or more, 5 parts by weight or more, 7 parts by weight or more, or 9 parts by weight or more, or may also be 17 parts by weight or less, 15 parts by weight or less, 13 parts by weight or less, or 10 parts by weight or less or so.

The curable syrup may also further contain a monomer unit of Formula 2 below.

[Formula 2]

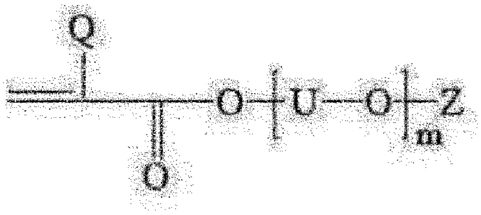

In Formula 2, Q is hydrogen or an alkyl group, U is an alkylene group with 1 to 4 carbon atoms, m is a number in a range of 1 to 5, and Z is hydrogen or an alkyl group. The alkyl (meth)acrylate unit, unlike Formula 2 above, is composed of an alkyl group containing only carbon and hydrogen at the terminal, but Formula 2 is distinguished therefrom in that the -U-O- units are repeated in the residue, thereby containing at least one oxygen.

In Formula 2 above, the alkyl group may be exemplified by a linear, branched, or cyclic substituted or unsubstituted alkyl group with 1 to 20 carbon atoms, 1 to 16 carbon atoms, 1 to 12 carbon atoms, 1 to 8 carbon atoms, or 1 to 4 carbon atoms.

Also, the alkylene group may be exemplified by a linear or branched substituted or unsubstituted alkylene group with 1 to 4 carbon atoms, where the example thereof may be exemplified by a propylene group or an ethylene group.

In addition, in Formula 2, m may be 4 or less, 3 or less, or 2 or less, or may also be 2 or more.

The monomer unit of Formula 2 above may be included in the polymer component in a range of about 10 to 50 parts by weight relative to 100 parts by weight of the alkyl (meth)acrylate unit. In another example, the ratio may be about 13 parts by weight or more, 15 parts by weight or more, 17 parts by weight or more, 19 parts by weight or more, 21 parts by weight or more, 23 parts by weight or more, 25 parts by weight or more, or 27 parts by weight or more, or may also be about 45 parts by weight or less, 40 parts by weight or less, 37 parts by weight or less, 35 parts by weight or less, 33 parts by weight or less or so, or 30 parts by weight or less or so.

The curable composition according to one example of the present application may further comprise a crosslinking agent, if necessary. The crosslinking agent may form a cured product having appropriate adhesion force and hardness by implementing the crosslinked structure with the constitutions included in the curable syrup.

As the crosslinking agent, for example, a urethane-based acrylate crosslinking agent, an aliphatic isocyanate crosslinking agent, an epoxy crosslinking agent, an aziridine crosslinking agent, and a metal chelate crosslinking agent may be used, without being limited thereto. In addition, as the crosslinking agent, one, or two or more types may be used. The urethane-based acrylate crosslinking agent is a compound having a plurality of urethane bonds (-NHCOO-) in its molecular chain and having an acrylic group capable of reacting to ultraviolet rays at the molecular terminal, which may use commercially PU330 (Miwon Commercial), PU256 (Miwon Commercial), PU610 (Miwon Commercial), and PU340 (Miwon Commercial), and the like. The aliphatic isocyanate crosslinking agent is, for example, an isocyanate compound such as isophorone diisocyanate, methylene dicyclohexyl diisocyanate or cyclohexane diisocyanate, but a derivative such as a dimer or trimer thereof may be used. As the epoxy crosslinking agent, for example, ethylene glycol diglycidyl ether, triglycidyl ether, trimethylolpropane triglycidyl ether, N,N,N',N'-tetraglycidyl ethylenediamine or glycerin diglycidyl ether, and the like may be used. As the aziridine crosslinking agent, for example, N,N'-toluene-2,4-bis(1-aziridinecarboxamide), N,N'-diphenylmethane-4,4'-bis(1-aziridinecarboxamide), triethylene melamine, bisisoprotaloyl-1-(2-methylaziridine), or tri-1-aziridinylphosphine oxide, and the like may be used. As the metal chelate crosslinking agent, for example, a metal chelate component or the like, which is a compound in which a multivalent metal such as aluminum, iron, zinc, tin, titanium, antimony, magnesium and/or vanadium is coordinated with acetyl acetone or ethyl acetoacetate, and the like, may be used.

The method of preparing the curable syrup containing such units is not particularly limited. For example, to implement the above-described syrup component, the curable syrup may be formed by mixing monomers in a desired ratio and then partially polymerizing the mixture appropriately.

According to the method for producing a cured product in accordance with the present invention, it is possible to produce a cured product having physical properties desired in the present invention by only the step of contacting the layer of the curable composition with the layer of the initiator component in the film including the layer of the initiator component on the surface as described above. That is, the present application can provide a cured product having the desired hardness and physical properties without separate heat or UV irradiation as the curing reaction starts at room temperature and proceeds at room temperature. However, it is also possible to additionally add an irradiation step of heat or UV as needed, but it is not necessarily required in the present invention. In other words, the curing may be performed by a redox polymerization reaction between the initiator component of the curable composition and the initiator component present on the surface of the film, without any separate thermal initiator or photoinitiator.

The cured product of the present invention can be produced, as layers having different components are in contact

with each other and the metal compound diffuses into the contact layer, thereby inducing an oxidation-reduction reaction, where if the curing reaction proceeds too quickly, the metal compound, or the like does not diffuse sufficiently, and thus it is difficult for a crosslinking reaction to occur between the curable syrups, so that the cured product may not have uniform physical properties. Therefore, by having such a composition, the present invention can control the curing reaction rate of the curable composition according to the above production method to an appropriate level.

The curable composition of the present invention may be a solventless composition. Here, the solventless composition is a composition substantially containing no solvent (aqueous solvent and organic solvent). Therefore, the content of aqueous and organic solvents in the curable composition may be 1 wt% or less, 0.5 wt% or less, 0.1 wt% or less, or may be substantially 0 wt%. That is, the curable composition of the present invention is implemented to have such a composition, so that it can implement physical properties equal to or better than those of a solvent type, while being solventless, and at the same time, can be suitable for an inert redox system.

In addition, the curable composition of the present invention may have a viscosity in a range of 1,000 cps to 5,000 cps, as measured at a temperature of 25°C and a shear rate of 50 rpm. The viscosity can be measured at room temperature using a Brookfield HB type viscometer.

In another example, the present invention can provide a cured product produced according to the curing method. The cured product may be a cured product of the curable composition mentioned in the production method, and the initiator component in the curable composition may or may not further comprise a reducing agent, but if the initiator component further comprises a reducing agent, a metal compound may not be included in an effective amount as the reducing agent.

## Advantageous Effects

According to an example of the present invention, by using a one-component curing method rather than a two-component curing method in which a main agent and a curing agent are divided and mixed, and then applied, a method for producing a cured product having excellent storage properties and capable of curing even under room temperature and dark reaction conditions without separate UV or heat is provided.

Best Mode

Hereinafter, preferred experimental examples are presented to aid understanding of the present invention. However, the following experimental examples are only intended to aid understanding of the present invention, and the present invention is not limited by the following experimental examples.

### Preparation Example 1: Preparation of curable syrup

To a flask equipped with a mechanical stirrer, 2-ethylhexyl acrylate (2-EHA), isobornyl acrylate (IBA), dimethyl acrylamide, and diethylene glycol ethyl ether acrylate, and 4-hydroxybutyl acrylate (HBA) were added in a weight ratio of 50:20:5:15:10, and after nitrogen purging, the temperature was raised to 60°C.

Then, an initiator (2,2'-azobis(4-methoxy-2,4-dimethylvaleronitrile)) was further added to the flask in an amount of 0.002 wt% or so relative to the total weight of the compounds added to the flask, and then stirred sufficiently to obtain a curable syrup (solid content: 16.36%).

The curable syrup has a viscosity of about 3,250 cps, as measured by Brookfield's DV-3 at a temperature of 25°C, a torque of 90%, and a shear rate of 50 rpm, and a weight average molecular weight (Mw) of about 1,050,000 g/mol.

### Preparation Example 2: Preparation of curable syrup

To a flask equipped with a mechanical stirrer, 2-ethylhexyl acrylate (2-EHA), isobornyl acrylate (IBA), and 2-hydroxyethyl acrylate (HEA)were added in a weight ratio of 50:30:20, and after nitrogen purging, the temperature was raised to 60°C.

Then, an initiator (2,2'-azobis(4-methoxy-2,4-dimethylvaleronitrile)) was further added to the flask in an amount of 0.001 wt% or so relative to the total weight of the compounds added to the flask, and then stirred sufficiently to obtain a curable syrup (solid content: 25.6%).

The curable syrup has a viscosity of about 2,540 cps, as measured by Brookfield's DV-3 at a temperature of 25°C, a torque of 90%, and a shear rate of 40 rpm, and a weight average molecular weight (Mw) of about 371,000 g/mol.

### Example 1

A curable composition was prepared by mixing 2 parts by weight of methyl ethyl ketone peroxide (MEKP) as an oxidizing agent and 0.6 parts by weight of N,N-dimethyl-p-toluidine as an organic compound (reducing agent) relative to

100 parts by weight of the curable syrup according to Preparation Example 1 above. The curable composition thus prepared has a viscosity of about 3,300 cps, as measured by Brookfield's DV-3 at a temperature of 25°C, a torque of 90%, and a shear rate of 50 rpm, immediately after the formulation.

Meanwhile, cobalt naphthenate as a metal compound (reducing agent) was applied to PET in an amount of 0.2 parts by weight relative to 100 parts by weight of the curable syrup.

Then, the curable composition mixed with the curable syrup, the oxidizing agent, and the organic compound was applied onto the PET applied with the metal compound, and left at room temperature for about 90 minutes to produce a cured product.

**Example 2**

A curable composition was prepared by mixing 2 parts by weight of methyl ethyl ketone peroxide (MEKP) as an oxidizing agent relative to 100 parts by weight of the curable syrup according to Preparation Example 1 above. The curable composition thus prepared has a viscosity of about 3,300 cps, as measured by Brookfield's DV-3 at a temperature of 25°C, a torque of 90%, and a shear rate of 50 rpm, immediately after the formulation.

Meanwhile, cobalt naphthenate as a metal compound (reducing agent) was applied to PET in an amount of 0.2 parts by weight relative to 100 parts by weight of the curable syrup.

Then, the curable composition mixed with the curable syrup and the oxidizing agent was applied onto the PET applied with the metal compound, and left at room temperature for about 90 minutes to produce a cured product.

**Example 3**

A curable composition was prepared by mixing 2 parts by weight of methyl ethyl ketone peroxide (MEKP) as an oxidizing agent and 0.6 parts by weight of N,N-dimethyl-p-toluidine as an organic compound (reducing agent) relative to 100 parts by weight of the curable syrup according to Preparation Example 2 above. The curable composition thus prepared has a viscosity of about 2,540 cps, as measured by Brookfield's DV-3 at a temperature of 25°C, a torque of 90%, and a shear rate of 40 rpm, immediately after the formulation.

Meanwhile, cobalt naphthenate as a metal compound (reducing agent) was applied to PET in an amount of 0.2 parts by weight relative to 100 parts by weight of the curable syrup.

Then, the curable composition mixed with the curable syrup, the oxidizing agent, and the organic compound was applied onto the PET applied with the metal compound, and left at room temperature for about 90 minutes to produce a cured product.

**Comparative Example 1**

A curable composition was prepared by mixing 2 parts by weight of methyl ethyl ketone peroxide (MEKP) as an oxidizing agent and 0.6 parts by weight of N,N-dimethyl-p-toluidine as an organic compound (reducing agent) to 100 parts by weight of the curable syrup according to Preparation Example 1 above. The curable composition thus prepared has a viscosity of about 3,280 cps, as measured by Brookfield's DV-3 at a temperature of 25°C, a torque of 90%, and a shear rate of 50 rpm, immediately after the formulation.

Meanwhile, the curable composition mixed with the curable syrup, the oxidizing agent, and the organic compound was applied onto the prepared PET, and left at room temperature for about 90 minutes to produce a cured product.

**Comparative Example 2**

A curable composition was prepared by mixing 2 parts by weight of methyl ethyl ketone peroxide (MEKP) as an oxidizing agent, 0.6 parts by weight of N,N-dimethyl-p-toluidine as an organic compound (reducing agent), and 0.2 parts by weight of cobalt naphthenate as a metal compound (reducing agent), relative to 100 parts by weight of the curable syrup according to Preparation Example 1 above. The curable composition thus prepared has a viscosity of about 3,300 cps, as measured by Brookfield's DV-3 at a temperature of 25°C, a torque of 90%, and a shear rate of 50 rpm, immediately after the formulation.

Meanwhile, the curable composition mixed with the curable syrup, the oxidizing agent, the organic compound, and the metal compound was applied onto the prepared PET, and left at room temperature for about 90 minutes.

**Comparative Example 3**

A curable composition was prepared by adding 0.3 parts by weight of a photoinitiator (irgacure 651) relative to

100 parts by weight of the curable syrup according to Preparation Example 1 above and mixing them. Then, the curable composition was bonded between PETs, and then irradiated with UV to obtain a cured product.

**Comparative Example 4**

A curable composition was prepared by mixing 2 parts by weight of methyl ethyl ketone peroxide (MEKP) as an oxidizing agent and 0.6 parts by weight of N,N-dimethyl-p-toluidine as an organic compound (reducing agent) relative to 100 parts by weight of the curable syrup according to Preparation Example 2 above. The curable composition thus prepared has a viscosity of about 2,540 cps, as measured by Brookfield's DV-3 at a temperature of 25°C, a torque of 90%, and a shear rate of 40 rpm, immediately after the formulation.

Meanwhile, iron acetylacetonate as a metal compound (reducing agent) was applied to PET in an amount of 0.2 parts by weight relative to 100 parts by weight of the curable syrup.

Then, the curable composition mixed with the curable syrup, the oxidizing agent, and the organic compound was applied onto the PET applied with the metal compound, and left at room temperature for about 90 minutes to produce a cured product.

**1. Total mass loss (TML) evaluation**

TML was evaluated in the following manner.

The cured products with a thickness of 100μm produced according to Examples and Comparative Examples above were each cut to 30 mm x 30 mm in width x length to prepare a sample, and the weight (A, unit: g) of the sample was measured. Afterwards, the weight of the sample (B, unit: g) was measured immediately after the sample was left at 150°C for 45 minutes, and TML was calculated according to General Equation below.

[General Equation]

$$\text{TML (\%)} = 100 \times (1 - B/A)$$

**2. GEL TIME evaluation**

GEL TIME was evaluated in the following manner. The initial viscosity was measured immediately after formulating each of the curable compositions in Examples and Comparative Examples above, and the viscosity was measured after storage at 50°C for 24 hours, where if it was changed by 10% or less compared to the initial viscosity, it was marked as O, and if it was changed by more than 10%, it is marked as X.

The results according to the evaluation are summarized in Table 1 below.

[Table 1]

| | TML (unit: %) | GEL TIME Evaluation |
|---|---|---|
| Example 1 | 1.98 | O |
| Example 2 | 2.11 | O |
| Example 3 | 1.74 | O |
| Comparative Example 1 | 2.5 | O |
| Comparative Example 2 | Not measured | X |
| Comparative Example 3 | 5.2 | O |
| Comparative Example 4 | 74.4 | O |

Although it has been described with reference to the above examples, those skilled in the relevant technical field will be able to understand that the present invention can be modified and changed variously within the range without departing from the spirit and scope of the present invention as described in the following claims.

## Claims

1. A method for producing a cured product comprising

   a step of contacting a layer of a curable composition including a curable syrup and an initiator component with a layer of an initiator component of a film including a layer of an initiator component on a surface, wherein
   the initiator component is an inert redox initiator system comprising an oxidizing agent and a reducing agent, where the reducing agent comprises a metal compound, and the metal compound is included in an effective amount only in any one of the layer of the initiator component on the film and the layer of the curable composition.

2. The method for producing a cured product according to claim 1, comprising
   a step of contacting the layer of the initiator component of the film including the layer of the initiator component on the surface with both sides of the layer of the curable composition.

3. The method for producing a cured product according to claim 1, wherein
   the curable composition comprises the reducing agent in a range of 0.05 to 10 parts by weight relative to 100 parts by weight of the curable syrup.

4. The method for producing a cured product according to claim 1, wherein
   the metal compound is a salt or chelate containing a metal ion, or a hydrate thereof, and the metal ion is selected from cobalt, iron, vanadium, copper, manganese, nickel, titanium, aluminum, tin, chromium, zinc, zirconium, indium, manganese, and a mixture thereof.

5. The method for producing a cured product according to claim 1, wherein
   the reducing agent further comprises at least one organic compound from the group consisting of amines, pyridines, aldehyde amine condensation compounds, thioureas, and their derivatives.

6. The method for producing a cured product according to claim 5, wherein
   the organic compound is included in a range of 100 to 700 parts by weight relative to 100 parts by weight of the metal compound.

7. The method for producing a cured product according to claim 1, wherein
   the oxidizing agent comprises a peroxide, a peroxy ester, a diacyl peroxide, or a persulfate.

8. The method for producing a cured product according to claim 1, wherein
   the oxidizing agent is included in a range of 100 to 2,000 parts by weight relative to 100 parts by weight of the reducing agent.

9. The method for producing a cured product according to claim 1, wherein
   the curable syrup comprises an alkyl (meth)acrylate unit, a polar functional group-containing monomer unit, and a crosslinking agent.

10. The method for producing a cured product according to claim 9, wherein
    the polar functional group comprises a hydroxy group, an epoxy group, an isocyanate group, a glycidyl group, an alkenyloxycarbonyl group, a (meth)acryloyl group, or an alkenyloxyalkyl group.

11. The method for producing a cured product according to claim 9, wherein
    the curable syrup comprises the alkyl (meth)acrylate unit in an amount of 30 to 70 wt%.

12. The method for producing a cured product according to claim 9, wherein
    the curable syrup comprises the polar functional group-containing monomer unit in a range of 3 to 60 parts by weight relative to 100 parts by weight of the alkyl (meth)acrylate unit.

13. The method for producing a cured product according to claim 9, wherein
    the curable syrup comprises, as the polar functional group-containing monomer unit, a hydroxy group-containing monomer unit or an epoxy group-containing monomer unit.

14. The method for producing a cured product according to claim 9, wherein

the crosslinking agent comprises a polyfunctional acrylate compound, a polyfunctional isocyanate compound, or a urethane acrylate compound.

**15.** The method for producing a cured product according to claim 1, wherein the curing is performed at room temperature.

**16.** The method for producing a cured product according to claim 15, wherein the curing is performed by a redox polymerization reaction of the initiator component of the curable composition and the initiator component present in the surface of the film.

**17.** The method for producing a cured product according to claim 1, wherein the curable composition is solventless.

**18.** The method for producing a cured product according to claim 1, wherein the curable composition has a viscosity in a range of 1,000 cps to 5,000 cps, as measured at a temperature of 25°C and a shear rate of 50 rpm.

**19.** A cured product being a cured product of a curable composition comprising a curable syrup and an initiator component, wherein the initiator component is an inert redox initiator system comprising an oxidizing agent, and when the initiator component further comprises a reducing agent, a metal compound is not included in an effective amount as the reducing agent.

**20.** The cured product according to claim 19, wherein

when the initiator component further comprises the reducing agent,
the curable composition comprises the reducing agent in a range of 0.05 to 10 parts by weight relative to 100 parts by weight of the curable syrup.

**21.** The cured product according to claim 19, wherein the curable syrup comprises an alkyl (meth)acrylate unit, a polar functional group-containing monomer unit, and a crosslinking agent.

**22.** The cured product according to claim 21, wherein the polar functional group comprises a hydroxy group, an epoxy group, an isocyanate group, a glycidyl group, an alkenyloxycarbonyl group, a (meth)acryloyl group, or an alkenyloxyalkyl group.

**INTERNATIONAL SEARCH REPORT**

International application No.
**PCT/KR2023/008388**

**A. CLASSIFICATION OF SUBJECT MATTER**

**C08J 5/18**(2006.01)i; **C08F 220/18**(2006.01)i; **C08F 4/40**(2006.01)i

According to International Patent Classification (IPC) or to both national classification and IPC

**B. FIELDS SEARCHED**

Minimum documentation searched (classification system followed by classification symbols)

C08J 5/18(2006.01); C08F 2/38(2006.01); C08F 2/44(2006.01); C08F 20/06(2006.01); C08F 290/06(2006.01); C08K 3/00(2006.01); C08L 33/00(2006.01); C08L 33/08(2006.01); C08L 91/06(2006.01); C09D 133/06(2006.01); C09J 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 경화성 시럽(curing syrup), 개시제(initiator), 산화제(oxidizing agent), 환원제 (reducing agent), 필름(film)

**C. DOCUMENTS CONSIDERED TO BE RELEVANT**

| Category* | Citation of document, with indication, where appropriate, of the relevant passages | Relevant to claim No. |
|---|---|---|
| X | KR 10-2008-0061421 A (LG MMA CORP.) 03 July 2008 (2008-07-03) See claims 1-14; and paragraphs [0009]-[0050]. | 19-20 |
| Y | | 1-18,21-22 |
| Y | KR 10-2017-0120581 A (SHOWA DENKO K.K.) 31 October 2017 (2017-10-31) See paragraphs [0056]-[0178]; and table 1. | 1-18 |
| Y | KR 10-1007231 B1 (PARK, Moon Sun et al.) 12 January 2011 (2011-01-12) See claims 1-6. | 9-14,21-22 |
| A | JP 2015-229683 A (RYOKO:KK) 21 December 2015 (2015-12-21) See entire document. | 1-22 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 October 2023** | **06 October 2023** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/008388**

**C. DOCUMENTS CONSIDERED TO BE RELEVANT**

| Category* | Citation of document, with indication, where appropriate, of the relevant passages | Relevant to claim No. |
|---|---|---|
| A | JP 2009-108274 A (NITTO DENKO CORP.) 21 May 2009 (2009-05-21) See entire document. | 1-22 |

Form PCT/ISA/210 (second sheet) (July 2022)

**INTERNATIONAL SEARCH REPORT**
**Information on patent family members**

International application No.
**PCT/KR2023/008388**

| Patent document cited in search report | Publication date (day/month/year) | Patent family member(s) | Publication date (day/month/year) |
|---|---|---|---|
| KR 10-2008-0061421 A | 03 July 2008 | KR 10-0855634 B1 | 01 September 2008 |
| KR 10-2017-0120581 A | 31 October 2017 | CA 2974933 A1 | 25 August 2016 |
| | | CN 107207681 A | 26 September 2017 |
| | | EP 3260479 A1 | 27 December 2017 |
| | | EP 3260479 A4 | 17 October 2018 |
| | | EP 3260479 B1 | 27 November 2019 |
| | | JP 2017-133094 A1 | 30 November 2017 |
| | | JP 6694866 B2 | 20 May 2020 |
| | | US 2018-0002562 A1 | 04 January 2018 |
| | | WO 2016-133094 A1 | 25 August 2016 |
| KR 10-1007231 B1 | 12 January 2011 | None | |
| JP 2015-229683 A | 21 December 2015 | None | |
| JP 2009-108274 A | 21 May 2009 | JP 5276826 B2 | 28 August 2013 |

Form PCT/ISA/210 (patent family annex) (July 2022)